Europäisches Patentamt

European Patent Office

Office européen des brevets

(19)

(11) Publication number: 0 249 643

A1

## (12) EUROPEAN PATENT APPLICATION

(21) Application number: 86108151.1

(22) Date of filing: 14.06.86

(51) Int. Cl.4: H01B 7/00 , B60M 3/00

The title of the invention has been amended (Guidelines for Examination in the EPO, A-III, 7.3).

(43) Date of publication of application:
23.12.87 Bulletin 87/52

(84) Designated Contracting States:
AT BE CH DE FR GB LI LU NL SE

(71) Applicant: AZIENDA TRASPORTI MUNICIPALI
Foro Buonaparte 61
I-20121 Milano(IT)

(72) Inventor: Giusti, Antonio
Via Privata L. Barzini 6
I-20125 Milano(IT)

(74) Representative: Luksch, Giorgio, Dr.-Ing. et al
Ing. A. Giambrocono & C. S.r.l. Via Rosolino
Pilo, 19/b
I-20129 Milano(IT)

(54) Cable for converting electric power from AC into DC.

(57) The cable for converting electric power from ac to dc, in particular, though not exclusively for electric traction use, consists of an outer sheath (2) and a core (3) made of conductive material and separated by a semiconductor material insert (4).

Fig. 1

EP 0 249 643 A1

## Cable for converting electric power from ac to dc, in particular for electric traction use

The present invention relates a cable for converting electric power from ac to dc, in particular though not exclusively for electric traction use.

As is known, presently used lines for supplying railways consist of a 23 KV three-phase middle voltage line coupled, at even spacings along its extension, to converting sub-stations effective to transform the 23 KV ac voltage to a 3 KV hexapolar cc voltage.

The distance separating each sub-station is so selected as to obtain a tradeoff or compromise of the economic and technologic requirements.

If a sub-station could be installed for each block circuit, then the drawbacks due to the return currents, susceptible to greatly damage the ground embedded metal structures, as well as to interfere with the signalling circuit associated with the railway, would be nearly eliminated, however with a great expense for each lenght unit.

The object of the present invention is to provide such a cable effective to convert into dc the supplied ac electric power, and affording the possibility of eliminating the transformation sub-stations, by replacing them with simpler and cheaper structure transforming blocks, thereby suppressing nearly completely the stray currents through the railway.

Another object is to eliminate the cc line protecting switches and to use exclusively the ac protecting switches.

The above and other objects of the invention will become more evident to those skilled in the art from the following disclosures and claims.

The cable according to the invention is characterized in that it consists of an outer sheath and a core made of a conductive material, separated by a semiconductor material insert.

The invention is illustrated, by way of an indicative but not limitative example in the figures of the accompaning drawings, where:

-figure 1 is a cross-sectional view of the cable according to the invention;

-figure 2 is a cross-sectional view of the cable according to the invention provided for rectifying a 6-phase current; and

-figure 3 is a perspective view of a railway using the cable according to the invention.

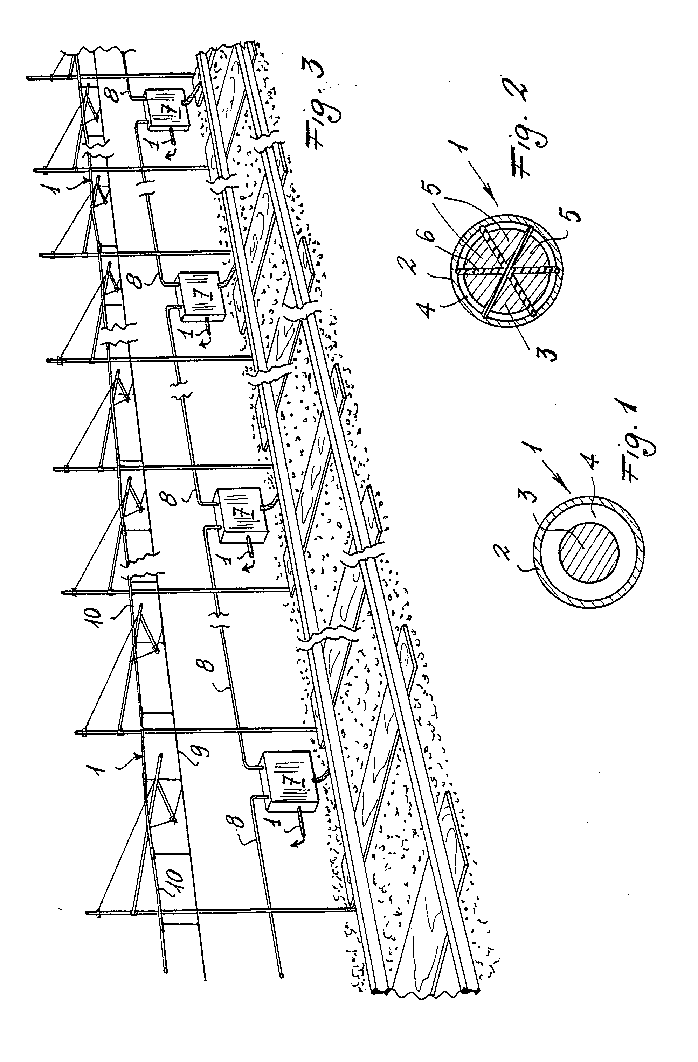

With reference to figure 1, the cable according to the invention, generically indicated at 1, consists of an outer sheath 2 and a core 3, both of copper and separated by an insert 4 of a semiconductor material, consisting of a combination of oxides or resins.

The single-phase current to be rectified flows through the core 3 and, through the semiconductor material 4, it flows to the outer sheath in a rectified condition.

With reference to figure 2, the cable according to the invention has the core 3 and insert 4 of semiconductor material, subdivided into six circular sectors 5 by a star of insulating material 6.

In that case it will be possible to rectify a 6-phase current by coupling each said phase to the core of each circular sector.

With reference to figure 3, which illustrates a particular application of the 6-pole cable according to the invention, the railway line supplied through said cable consists essentially of a plurality or series of transforming blocks 7, coupled by a 8 to 23 KV line.

Each transforming block 7, which reduces voltage from 23 KV to 6 KV is coupled to the contact wire 9 by means of the cable according to the invention which, all along the line, also acts as a supporting cable 10.

## Claims

1. A cable for converting electric power from ac to dc, in particular though not exclusively for electrical traction use, characterized in that it consists of an outer sheath (2) and a core (3) made of a conductive material separated by an insert (4) made of a semiconductor material.

2. A cable according to the preceding claim, characterized in that both the core (3) and insert (4) are subdivided in such a way as to form circular sectors (5) insulated from one another.

3. A cable according to the preceding claim, characterized in that said circular sectors (5) are provided in a like number to that of the phases of the current to be rectified.

Fig. 3

Fig. 2

Fig. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-1 172 077  (B.I.C.C.)<br>* Page 2, column 1, last paragraph - column 2, line 4; figure 1 * | 1 | H 01 B    7/00<br>B 60 M    3/00 |
| A | DE-A-2 507 394  (LICENTIA)<br>* Page 4, last paragraph - page 6, claim 1; figures * | 1 | |
| A | FR-A-2 085 852  (WILHELM PIECK)<br>* Page 4, line 10 - page 5, line 2; figures 1-5 * | 2 | |

---

TECHNICAL FIELDS
SEARCHED (Int. Cl.4)

H 01 B
H 02 J
B 60 M

The present search report has been drawn up for all claims

| Place of search | Date of completion of the search | Examiner |
|---|---|---|
| THE HAGUE | 16-02-1987 | DEMOLDER J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82